# EUROPEAN PATENT APPLICATION

(11) **EP 3 193 048 A1**
(43) Date of publication of application: **19.07.2017**
(21) Application number: 16151411.2
(22) Date of filing: 15.01.2016
(51) Int. Cl.: F16K 1/42, F16K 31/00, F24D 19/10, G05D 23/00

(54) **VALVE**

(71) Applicant: Danfoss A/S, 6430 Nordborg (DK)
(72) Inventor: Clausen, Anders Østergaard, 8680 Ry (DK); Markvart, Arne, 8600 Silkeborg (DK); Hesseldahl, Søren, 7182 Bredsten (DK)
(74) Representative: Knoblauch, Andreas

(57) **Abstract**

The invention relates to a valve (1) comprising a valve housing (2), a valve seat (3) and a valve element (4). The valve element (4) is displaceable relative to the housing (2) in a closing direction towards the valve seat (3).

The task of the invention is to provide a valve of the above kind which has an improved temperature compensation.

According to the present invention the above task is solved in that at least one element (5, 7, 11) is arranged inside the housing (2), wherein the at least one element (5, 7, 11) increases the maximum distance of the valve seat (3) to the valve element (4) when the temperature of the at least one element (5, 7, 11) increases.

## Description

The invention relates to a valve comprising a valve housing, a valve seat and a valve element, wherein the valve element is displaceable relative to the housing in a closing direction towards the valve seat.

Valves of this kind are, for example, used to control the flow of a fluid into a radiator or a heat exchanger. Such valves are often used with a thermostatic actuator which is attached to the valve and readjusts the distance of the valve element from the valve seat in case the room temperature changes. However, such thermostatic actuators have the disadvantage that they have to be arranged directly on the valve and are therefore often heated by the hot heating fluid to a temperature far above the room temperature. Consequently, the thermostatic actuators often overcompensate and close the valves too far although the room temperature has not yet reached a corresponding temperature level.

The task of the invention is therefore to provide a valve in which the temperature readjustment is improved.

According to the present invention the above task is solved in a valve mentioned in the outset in that at least one element is arranged inside the housing, wherein the at least one element increases the maximum distance of the valve seat to the valve element when the temperature of the at least one element increases.

Consequently, the valve now comprises an element, which can improve the control of the valve. In particular, the valve will not reduce the flow to the valve too much too early before the room temperature has sufficiently risen when connected to a radiator or heat exchanger. As explained above, this problem in particular appears with the use of thermostatic actuators which are directly attached to the valve and are in many cases heated to a temperature above the room temperature by the direct contact to the housing and therefore the hot liquid that flows through the valve. The element may be a dedicated element like a wax ring or a shape memory alloy actuator. The element can however also be a valve seat member or a valve insert that has a high coefficient of thermal expansion. One in any case needs to ensure that the overall expansion of the elements connected to the valve seat due to a temperature increase is larger than the combined thermal expansion of the members connected to the valve element. This way by a temperature increase in the valve the distance of the valve element to the valve seat will be increased. This can compensate for an overreaction of an attached thermostatic actuator as explained above. A preferred embodiment of the valve is a heat exchanger valve, in particular a radiator valve.

In a preferred embodiment the valve comprises a thermostatic actuator, wherein the thermostatic actuator reduces the maximum distance of the valve element to the valve seat when the thermostatic actuator is influenced by a temperature increase, wherein at least one element at the same time thermally expands to increase the maximum distance of the valve element to the valve seat to compensate for a higher temperature of the thermostatic actuator than the room temperature. This means that in total by a temperature increase in this case the distance from the valve element to the valve seat will be reduced, whereby the flow through the valve is throttled. However, the displacement of the valve seat away from the valve element due to the expansion of the element acts in the opposite direction to the actuation of the valve element by the thermostatic actuator. Since the thermostatic actuator will in many cases overreact to a temperature increase because of the direct temperature contact to the housing and the hot fluid flowing through the housing the element can thus compensate and lead to a more accurate control of the valve under temperature changes.

In a preferred embodiment the valve seat is arranged in a valve seat member. This is a relatively simple embodiment in which the valve seat member can be arranged displaceable relative to the housing parallel to the closing direction. Furthermore, the valve seat member can either be displaced by an element that expands under temperature increase and/or the valve seat member can itself have a high coefficient of thermal expansion and thereby expand under a temperature increase, thus displacing the valve seat away from the valve element. The valve seat member can have a cylinder-like shape, preferably a hollow-cylinder-like shape. Alternatively, the valve seat member can have a cone-like shape, a frustro-cone-like shape or an elliptical cylinder-like shape.

In a preferred embodiment the valve comprises an insert, wherein the valve seat is guided in the insert. This embodiment has the advantage that one can ensure that there are no problems due to a temperature induced softening of the valve seat member in case the valve seat member is made from a plastic material, because the insert can be made from the same material. In the state of the art the function of the insert is often performed by a part of the housing, which is made from a metal. Consequently, the housing can still be made from a metal, but the insert and/or the valve seat member can be made from a plastic material. The insert can have a cylinder-like shape, preferably a hollow-cylinder-like shape. Alternatively, the insert can have a cone-like shape, a frustro-cone-like shape or an elliptical cylinder-like shape.

In a preferred embodiment the valve comprises a valve top insert, wherein the valve seat member is at one axial end connected to the valve top insert. In this embodiment either one or both of the valve seat member and the valve top insert can be elements that increase the distance of the valve seat to the valve element under a temperature increase. However, the valve top insert can also be fixed relative to the housing and only the valve seat member thermally elongates to increase the maximum distance of the valve seat to the valve element under a temperature increase. The valve seat member may be connected to the valve top insert by a snap-in connection or the like.

In a further preferred embodiment the valve comprises a stem that is guided in the valve top insert, wherein the stem is at one axial end connected to the valve element. The other axial end of the stem can either abut a thermostatic actuator or in case a stuffing box is used it can abut an axial end of a pin of the stuffing box.

In a further preferred embodiment the at least one element elongates by a larger distance under a temperature increase than the stem. In case several elements are used the sum of the expansion of the elements is preferably larger than the distance that the stem expands under a temperature increase.

In a further preferred embodiment the valve comprises a stuffing box, wherein a pin is guided in the stuffing box. In this embodiment the pin can at one axial end abut the stem and at the other axial end be connected to or abut a thermostatic actuator.

It is preferred if the at least one element elongates by a larger distance under a temperature increase than the stem and the pin combined. This way it is ensured that the relative distance of the valve element and the valve seat will be increased under a temperature increase of the elements, the stem and the pin.

It is preferred if a thermostatic actuator is attached to the valve and engages the pin to control the opening degree of the valve.

In a further preferred embodiment the valve seat member is rotatable inside the insert. This embodiment allows for an increased functionality of the valve. For example, the rotation of the valve seat member inside the insert can allow to preset the valve. For example, the valve seat member as well as the insert can both comprise openings and can be more or less aligned depending on the relative rotational position and axial position of the valve seat member and the insert.

In a further preferred embodiment at least one element is a wax ring. In this case the wax ring is preferably arranged at an axial end of the valve seat member such that a thermal expansion of the wax ring will displace the valve seat member and thus the valve seat away from the valve element.

It is preferred if at least one element is a shape memory alloy actuator. The use of a shape memory alloy actuator opens more constructional options since a shape memory alloy actuator can depending on the choice of material and the memorized shape also shrink under a temperature increase.

In a further preferred embodiment at least one element is arranged at an axial end of the valve seat member. One may, for example, arrange an element between the valve top insert and the valve seat member such that the valve seat member and thus the valve seat is displaced away from the valve top insert thus increasing the relative distance of the valve seat to the valve element when the element thermally elongates. However, one may also arrange the element on the end of the valve seat member at which the valve seat is arranged. In this case, the element preferably is a shape memory alloy actuator which shrinks under a temperature increase and can thus pull the valve seat member away from the valve element.

Preferred embodiments of the invention will now be described in more detail with reference to the figures, wherein:
- Fig. 1: shows a cut view of a valve according to a first embodiment of the invention,
- Fig. 2: shows an enlarged view of the valve shown in Fig. 1,
- Fig. 3: shows an isometric cut view of a valve according to the first embodiment of the invention,
- Fig. 4: shows an enlarged view of the valve according to Fig. 3,
- Fig. 5: shows a cut view of a valve according to a second embodiment,
- Fig. 6: shows an enlarged view of the valve according to Fig. 5.

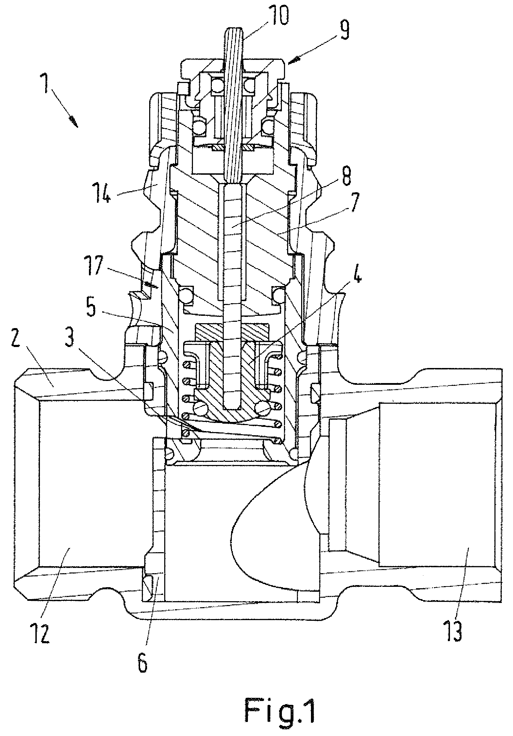

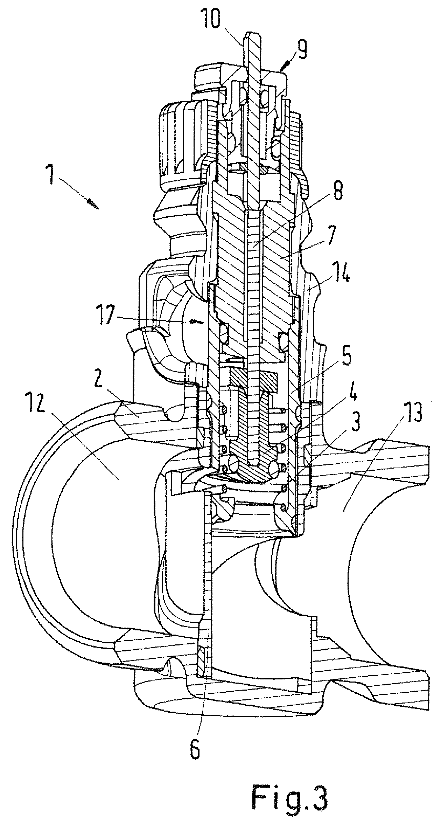

Fig. 1 to 4 show a first embodiment of a valve 1 according to the invention which may be a radiator valve or another heat exchanger for heating or cooling purposes. The valve 1 comprises a housing 2 in which an outlet 12 as well as an inlet 13 are arranged. The valve 1 comprises a valve seat 3 that cooperates with a valve element 4 to throttle a fluid flow through the valve. The valve seat 3 is in this embodiment arranged in a valve seat member 5 that has a cylinder-like shape. The valve seat 3 is arranged at one axial end of the valve seat member 5. The valve seat 3 is arranged at an inner surface of the valve seat member 5.

The valve element 4 is arranged at one axial end of a stem 8. The stem 8 as well as the valve element 4 can be axially displaced to throttle or close the valve. At the axial end of the stem 8 opposite to the valve element 4 a pin 10 of a stuffing box 9 is arranged. The stem 8 is guided in a valve top insert 7. The valve top insert 7 is held inside the housing by a valve top 14. The valve top 14 can be connected to the housing 2, for example by a snap-in connection. The latter is advantageous if the valve top 14 is made from a plastic material while the housing 2 is made from a metal.

The valve 1 may comprise a thermostatic actuator or a similar valve attachment which is for simplicity not shown in the Fig. 1 to 6. However, the thermostatic actuator may, for example, be attached to the valve top 14 and engage the pin 10 to actuate the valve element 4.

Thermostatic actuators in the state of the art however have the disadvantage that they are often heated above the momentary room temperature by the direct contact to the valve which is heated by the heating fluid. Since the heating fluid usually has a temperature far above the room temperature the thermostatic actuator will in many cases also be heated to a higher temperature than the room temperature. Thermostatic actuators are usually arranged to reduce the flow through the valve when the temperature of the thermostatic actuator increases such that the valve does not need to be manually readjusted once a desired temperature has been reached. However, since the thermostatic actuator will in many cases be heated to a too high temperature not corresponding to the actual room temperature the thermostatic actuator will often close the valve too far compared to the actual room temperature that has been reached. According to the present invention the valve seat can now also be displaced relative to the housing parallel to the closing direction of the valve element 4 towards the valve seat 3. Preferably, this is achieved by at least one element in the valve which can expand or elongate and thus displace the valve seat 3.

In the first embodiment according to Fig. 1 to 4 one of the elements is the valve seat member 5. The valve seat member 5 to this end is only fixed to the valve top insert 7 at the axial end of the valve seat member 5 opposite to the valve seat 3. This way, when the valve seat member 5 thermally elongates under a temperature increase the valve seat 3 will be displaced in a direction away from the valve element 4 whereby the flow through the valve is increased. However, since this effect is preferably smaller than the readjustment of the opening degree of the valve by an attached thermostatic actuator the overall effect of a temperature increase will still be that the valve element 4 will be moved closer to the valve seat 3. However, in the view according to Fig. 1 to 4 both the valve seat 3 as well as the valve element 4 would be displaced downwards in this case.

A further effect that has to be taken into account is of course that also the stem 8 as well as the pin 10 will to some degree thermally expand and elongate under a temperature increase. Therefore, preferably the valve seat member 5 elongates by a larger distance under a temperature increase than the stem 8. In case both a stem 8 as well as a pin 10 are used it is preferred if the valve seat member 5 elongates by a larger distance under a temperature increase than that of the stem 8 and the pin 10 combined. This can be achieved by choosing a material for the valve seat member 5 that has a larger coefficient of thermal expansion than that of the stem 8 and the pin 10.

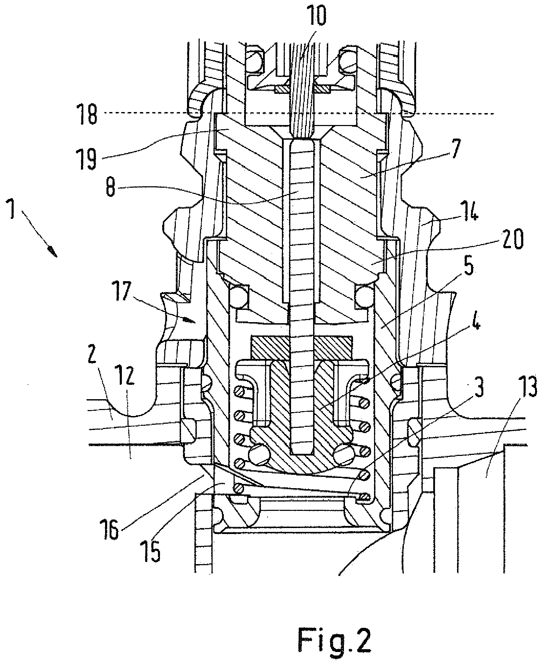

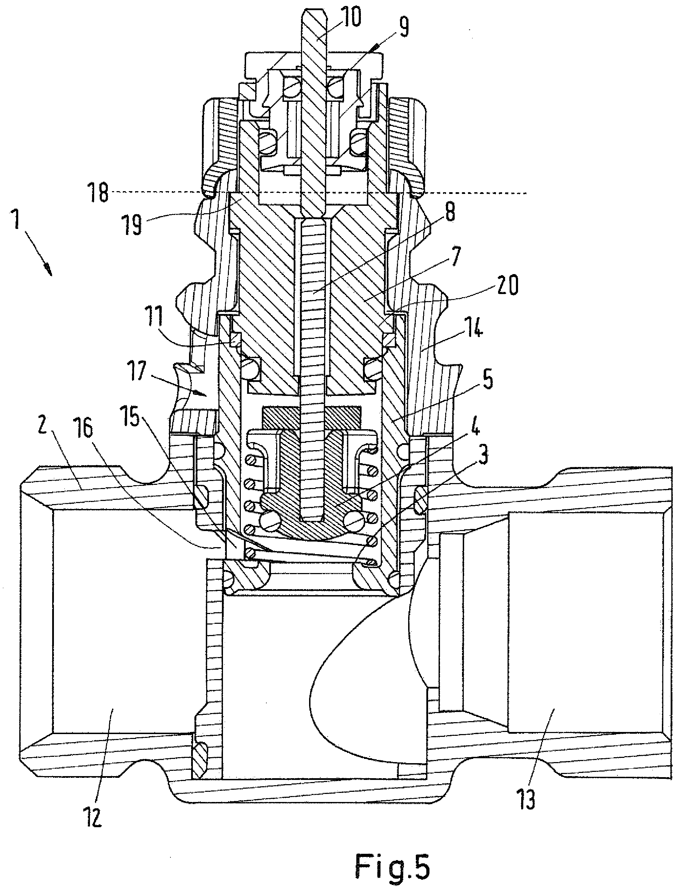

The axial elongation of the valve top insert 7 and the valve seat member 5 under a temperature increase can be defined with respect to a reference plane 18 shown in Fig. 2 and 5. The valve top insert 7 abuts the valve top 14 at the reference plane 18 with a rim 19. At an axial end 20 of the valve top insert 7 the valve top insert 7 abuts the valve seat member 5. Consequently, a thermal elongation of the valve top insert 7 with respect to the reference plane 18 leads to a displacement of the valve seat member 5 displacing the valve seat 3 away from the valve element 4. This effect adds to the thermal elongation of the valve seat member 5 itself which also displaces the valve seat 3 away from the reference plane 18. The valve seat member 5 and the valve top insert 7 are joined such that their combined elongation under a temperature increase moves the valve seat 3 away from the reference plane 18. The axial displacement of the valve seat 3 with respect to the reference plane 18 thus depends on the hinged movement of the valve top insert 7 and the valve seat member 5. Thereby, the valve seat 3 is displaced away from the reference plane 18 by a larger distance under a temperature increase than the valve element 4 due to a temperature increase in the stem 8 and/or the pin 10.

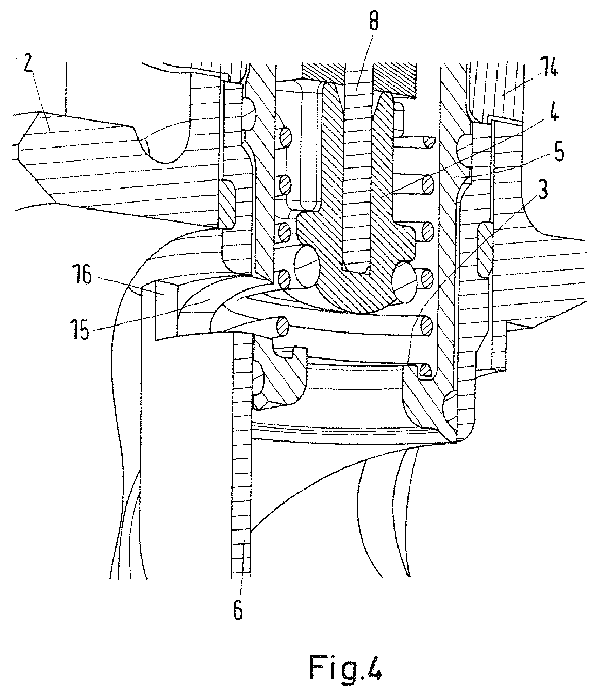

Referring to the enlarged view of Fig. 2 and 4 the valve seat member 5 also comprises a first opening 15. Similarly the insert 6 comprises a second opening 16. In Fig. 2 and 4 the first opening 15 and the second opening 16 are aligned in the axial direction as well as rotationally. In this relative position of the first opening 15 and the second opening 16 fluid coming from the valve seat 3 can pass the first opening 15 and then the second opening 16 to reach the outlet 12. However, depending on the relative sizes of the first opening 15 and the second opening 16 one may also use the displaceable valve seat 3 to achieve an additional means of throttling the flow through the valve by changing the alignment of the first opening 15 and the second opening 16. For example, the valve seat member 5 may also be rotatable, whereby the effective flow cross section through the second opening 16 and the first opening 15 towards outlet 12 can be reduced. Moreover, one may even close any direct fluid connection to the outlet 12 through the first and second openings 15 and 16 by rotating the valve seat member 5. This allows for an additional control functionality of the valve, for example one may close off the valve during installation or maintenance towards the inlet 13 or the outlet 12.

The valve 1 furthermore comprises an inspection window 17. In the shown embodiments the inspection window 17 is arranged in the valve top 14 to allow an inspection of the valve seat member 5. This may, for example, be used to inspect the current rotational position of the valve seat member 5. Additionally or alternatively the inspection window 17 can also be used to check the current axial position of the valve seat member 5. Consequently, the first opening 15 and the second opening 16 can be used as a means of presetting the valve by rotating the valve seat member 5 relative to the insert 6.

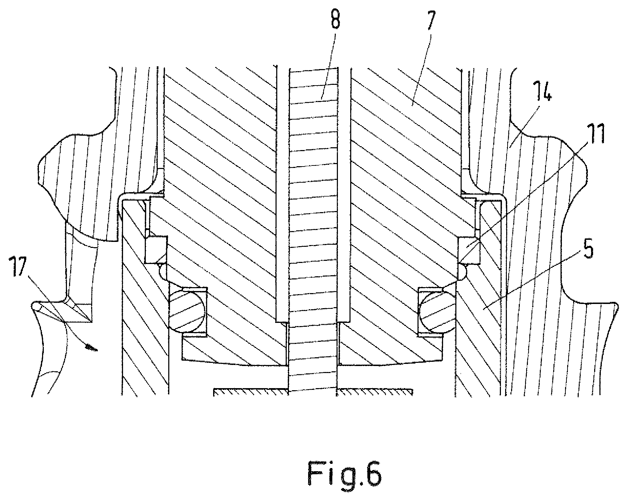

The second embodiment according to Fig. 5 and 6 comprises an element 11 in form of a thermoactive member. Preferably, the thermoactive member has the shape of a wax ring, but it may also be a shape memory alloy actuator. The position of the thermoactive member can be seen in detail in Fig. 6. The thermoactive member is arranged at an axial end of the valve seat member 5 opposite to the valve seat 3. The thermoactive member preferably abuts the valve seat member 5 as well as the valve top insert 7. Using a dedicated thermoactive member has the advantage that the choice of materials in particular for the valve seat member 5 is broader. In particular, it is not necessary in this case that the coefficient of thermal expansion of the valve seat member 5 is much larger than the coefficient of thermal expansion of the stem 8 or the pin 10 in order to achieve a net relative displacement of the valve seat 5 relative to the valve element 4 under a temperature increase in the valve interior. However, in Fig. 1 to 4 the valve seat member 5 has the role of an element with a large coefficient of thermal expansion. Nevertheless, both a dedicated thermoactive member as well as an element with additional functions like the valve seat member 5 may be used to achieve an overall increase of the distance of the valve seat 3 and the valve element 4 due to a temperature increase in the valve. As said before, the combined effect of the thermal expansion inside the valve 1 and the readjustment due to an attached valve attachment should however always result in a throttling of the flow through the valve under a temperature increase.

## Claims

1. A valve (1) comprising a valve housing (2), a valve seat (3) and a valve element (4),wherein the valve element (4) is displaceable relative to the housing (2) in a closing direction towards the valve seat (3), **characterized in that** at least one element (5, 7, 11) is arranged inside the housing (2), wherein the at least one element (5, 7, 11) increases the maximum distance of the valve seat (3) to the valve element (4) when the temperature of the at least one thermoactive member (11) increases.

2. The valve (1) according to claim 1, **characterized in that** the valve (1) comprises a thermostatic actuator, wherein the thermostatic actuator reduces the maximum distance of the valve element (4) to the valve seat (3) when the thermostatic actuator is influenced by a temperature increase, wherein at least one element (5, 7, 11) at the same time thermally expands to increase the maximum distance of the valve element to the valve seat to compensate for a higher temperature of the thermostatic actuator than the room temperature.

3. The valve (1) according to claim 1 or 2, **characterized in that** the valve seat (3) is arranged in a valve seat member (5).

4. The valve (1) according to any of claims 1 to 3, **characterized in that** the valve (1) comprises an insert (6), wherein the valve seat (3) is guided in the insert (6).

5. The valve (1) according to claim 3 or 4, **characterized in that** the valve (1) comprises a valve top insert (7), wherein the valve seat member (5) is at one axial end connected to the valve top insert (7).

6. The valve (1) according to claim 5, **characterized in that** the valve (1) comprises a stem (8), that is guided in the valve top insert (7), wherein the stem (8) is at one axial end connected to the valve element (4).

7. The valve (1) according to claim 6, **characterized in that** the at least one element (5, 7, 11) elongates by a larger distance under a temperature increase than the stem (8).

8. The valve (1) according to any of claims 1 to 7, **characterized in that** the valve comprises a stuffing box (9), wherein a pin (10) is guided in the stuffing box (9).

9. The valve (1) according to claim 8, **characterized in that** the at least one element (5, 7, 11) elongates by a larger distance under a temperature increase than the stem (8) and the pin (10) combined.

10. The valve (1) according to any of claims 3 to 9, **characterized in that** the valve seat member (5) thermally elongates to increase the maximum distance of the valve seat (3) to the valve element (4) under a temperature increase.

11. The valve (1) according to any of claims 8 to 10, **characterized in that** a thermostatic actuator is attached to the valve (1) and engages the pin (10) to control the opening degree of the valve (1).

12. The valve (1) according to any of claims 3 to 11, **characterized in that** the valve seat member (5) is rotatable inside the insert (7).

13. The valve (1) according to any of claims 1 to 12, **characterized in that** at least one element (11) is a wax ring.

14. The valve (1) according to any of claims 1 to 13, **characterized in that** at least one element is a shape memory alloy actuator.

15. The valve (1) according to any of claims 3 to 14, **characterized in that** at least one element (7, 11) is arranged at an axial end of the valve seat member (5).
